# EUROPÄISCHE PATENTANMELDUNG

(11) **EP 1 810 781 A1**
(43) Veröffentlichungstag der Anmeldung: **25.07.2007**
(21) Anmeldenummer: 07101050.8
(22) Anmeldetag: 23.01.2007
(51) Int. Cl.: B23Q 11/00, B26D 7/18, B26F 1/16, E06B 9/266

(54) **Verfahren und Vorrichtung zum Bohren von plissiertem Behangmaterial für Verschattungsanlagen**

(30) Priorität: 23.01.2006 DE 102006003327
(71) Anmelder: VKR Holding A/S, 2860 Søborg (DK)
(72) Erfinder: Rolf, Julian, 27616 Appeln (DE); Mahler, Hartmut, 27476 Cuxhaven (DE)
(74) Vertreter: von Ahsen, Erwin-Detlef

(57) **Zusammenfassung**

Die Erfindung betrifft ein Verfahren zum Bohren von plissiertem Behangmaterial für Verschattungsanlagen mit einem drehend antreibbaren Hohlbohrer (12) und einen in eine Mittenbohrung (18) des Hohlbohrers (12) einführbaren Dorn (22). Um Verstopfungen an dem Hohlbohrer (12) zu vermeiden, wird der Dorn (22) nach dem erfindungsgemäßen Verfahren zum Zwecke der Reinigung der Mittenbohrung (18) des Hohlbohrers (12) hin und her bewegt.

## Beschreibung

Die Erfindung betrifft ein Verfahren und eine Vorrichtung zum Bohren von plissiertem Behangmaterial für Verschattungsanlagen mit einem drehend antreibbaren Hohlbohrer und einen in eine Mittenbohrung des Hohlbohrers einführbaren Dorn.

Der Behang von Verschattungsanlagen mit plissiertem Behangstoff, sogenannten Plissees, muss mit Bohrungen versehen werden, durch welche Spannschnüre durch den Behang gefädelt werden. Zu diesem Zweck wird der plissierte Behangstoff im zusammengelegten Zustand durchbohrt, so dass der plissierte, in mehreren Lagen übereinander liegende Stoff insgesamt Lage für Lage durchbohrt wird. Zum Bohren des Stoffes werden Hohlbohrer eingesetzt, wie sie zum Bohren von Papierstapeln in unterschiedlichen Ausführungen bekannt sind, beispielsweise aus der US 4,632,611 oder der DE 69 00 411 U. Des Weiteren sind Hohlbohrer zum Bohren von Metall beispielsweise aus der DE 31 53 412 C1 bekannt, die einen in eine Mittenbohrung des Hohlbohrers einführbaren Stift zum Zentrieren des Bohrers verwenden.

Beim Bohren mit dem Hohlbohrer entstehen Abfallstücke, sogenannte Chips, welche durch die Mittenbohrung im Hohlbohrer aufgenommen werden. Die Abfallstücke reiben dabei an der Innenwandung des Hohlbohrers, was mit einer entsprechenden Wärmeentwicklung verbunden ist. Zum Teil führt dieses zu so hohen Temperaturen, dass Stoffe aus schmelzfähigen Materialien aufschmelzen und dadurch die Abfallstücke mit der Innenwandung des Holbohrers verkleben. Dieses führt zu einer Verstopfung des Hohlbohrers und zu einer Verschlechterung des Bohrergebnisses.

Hiervon ausgehend liegt der Erfindung das Problem zugrunde, ein Verfahren und eine Vorrichtung der eingangs genannten Art derart weiterzubilden, dass Verstopfungen des Hohlbohrers vermieden werden.

Zur Lösung dieses Problems ist das erfindungsgemäße Verfahren durch einen in den Hohlbohrer einführbaren Dorn gekennzeichnet, der zum Zwecke der Reinigung der Mittenbohrung des Hohlbohrers hin und her bewegt wird.

Die Durchführung des Verfahrens erfolgt über eine Bohrvorrichtung zum Bohren von plissiertem Behangmaterial für Verschattungsanlagen mit einem drehend antreibbaren Hohlbohrer, die durch einen in den Hohlbohrer einführbaren Dorn gekennzeichnet ist.

Mittels des Dorns wird die Mittenbohrung im Hohlbohrer bei Bedarf, gegebenenfalls sogar nach jedem einzelnen Bohrvorgang, freigestochen. Hierdurch werden selbst verklebte Abfallstücke zuverlässig aus der Mittenbohrung entfernt, so dass die Mittenbohrung wieder gereinigt ist und ein neuer Bohrvorgang erfolgen kann.

Vorzugsweise wird der Dorn von einer freien Seite des Hohlbohrers her in den Hohlbohrer eingeführt. Mit anderen Worten wird der Dorn also von der Seite in den Hohlbohrer eingeführt, an der sich die Schneide zum Bohren des Behangstoffes befindet. An dieser Seite sind keine störenden Antriebsmittel für den Hohlbohrer, so dass der Zugang zum Hohlbohrer für den Dorn frei ist. Selbstverständlich ist es alternativ aber auch möglich, den Dorn von hinten in den Bohrer einzuführen, so dass die Abfallstücke zur Schneide hin wieder aus dem Hohlbohrer entfernt werden.

Um den Dorn in den Hohlbohrer einzuführen, kann der Dorn feststehend ausgebildet sein und der Hohlbohrer wird nach dem Bohren soweit weiter nach vorne durchgefahren, dass der Dorn in den Hohlbohrer eindringt. Bei Einführen des Dorns von hinten her, nach der vorstehend beschriebenen zweiten Alternative, kann der Dorn ebenfalls feststehend ausgebildet sein, so dass der Hohlbohrer beispielsweise beim zurückziehen aus dem zu bohrenden Stoff automatisch wieder gereinigt wird. Vorzugsweise wird jedoch der Dorn selbst zum Einführen in den Hohlbohrer hin und her bewegt. Dieses kann konkret so erfolgen, dass zunächst der plissierte Behangstoff gebohrt wird. Während der Hohlbohrer noch in seiner Endstellung nach dem Bohren verbleibt, wird der Dorn in den Hohlbohrer eingeführt und sticht die Mittenbohrung frei. Sodann wird der Bohrer und gegebenenfalls gleichzeitig der Dorn in ihre Ausgangsposition zurückgezogen, so dass der gebohrte Behangstoff entnommen werden kann. Hierdurch ergibt sich eine geringstmögliche Längsausdehnung der erfindungsgemäßen Bohrvorrichtung. Zum Bewegen des Dorns eignet sich insbesondere ein Druckmittelzylinder, beispielsweise ein Pneumatikzylinder.

Zum Bohren des Behangstoffs ist ein Gegenlager für den Hohlbohrer erforderlich, an dem der Behangstoff während des Bohrens anliegt. Dieses Gegenlager ist nach einer Weiterbildung der Erfindung mit einer Durchführung für den Dorn versehen. Hierdurch kann das Gegenlager während des gesamten Arbeitszyklusses ortsunveränderlich ausgebildet sein, da es aufgrund der Durchführung dem Dorn nicht im Wege ist.

Beim Bohren des Behangstoffes muss der Hohlbohrer zum sicheren Bohren auch der letzten Lage des Behangstoffes ein kleines Stück weiter durch den Behangstoff durchgebohrt werden, als es dem gerade berührenden Auftreffen auf das Gegenlager entspricht. Das Gegenlager wird also jedesmal ein kleines Stückchen mit angebohrt. Hierdurch verschleißt das Gegenlager innerhalb einer gewissen Anzahl von Arbeitszyklen und muss ausgetauscht werden. Um die Standzeit des Gegenlagers zu erhöhen, ist es nach einer konstruktiven Ausgestaltung der Erfindung mit mehreren Durchführungen für den Dorn versehen und drehbar und/oder verschieblich gelagert. Ist das Gegenlager in dem gerade aktiven Bereich verschlissen, wird das Gegenlager einfach zur nächsten Durchführung weiter gedreht oder weiter verschoben und es kann weiter gebohrt werden. Das Drehen oder Verschieben des Gegenlagers ist dabei mit erheblich geringerem Aufwand verbunden, als ein Auswechseln eines verschlissenen Gegenlagers, so daß Zeit und Kosten eingespart werden. Ist das Gegenlager im Bereich aller Durchführungen verschlissen, wird es durch ein neues Gegenlager ausgetauscht.

Vorzugsweise ist das Gegenlager verdrehsicher in einer Matrize gelagert. Durch weiterdrehen in der Matrize wird das Gegenlager weiter gedreht.

Beim Einlegen des Gegenlagers in die Matrize ist darauf zu achten, dass das Gegenlager immer so in die Matrize eingelegt wird, dass eine der Durchführungen zum Dorn fluchtet, damit der Dorn durch die entsprechende Durchführung hindurch geführt werden kann. Hierzu sollten an der Matrize und dem Gegenlager entsprechende Mittel vorgesehen sein, durch welche das Gegenlager formschlüssig und verdrehsicher gegenüber der Matrize gehalten wird. Da es letztlich egal ist, welche der Durchführungen fluchtend zum Dorn ausgerichtet wird, lässt sich das Gegenlager besonders einfach dann einlegen, wenn sich das Gegenlager in einer der Anzahl der Durchführungen entsprechenden Anzahl von Orientierungen in die Matrize einlegen lässt. Dieses lässt sich nach einer konstruktiven Ausgestaltung der Erfindung beispielsweise dadurch erreichen, dass das Gegenlager vieleckig ausgebildet ist, mit einer der Anzahl der Durchführungen entsprechenden Anzahl von Ecken. Bei einem Gegenlager mit beispielsweise acht Durchführungen ist dementsprechend ein achteckiges Gegenlager vorgesehen.

Die Erfindung wird nachfolgend anhand eines in der Zeichnung dargestellten Ausführungsbeispiels näher erläutert. In der Zeichnung zeigen:
Fig.1 1 eine schematische Darstellung einer Bohrvorrichtung mit den Erfindungsmerkmalen in perspektivischer Ansicht,
Fig. 2 ein Detail der Bohrvorrichtung gemäß Fig. 1 in Vorderansicht.

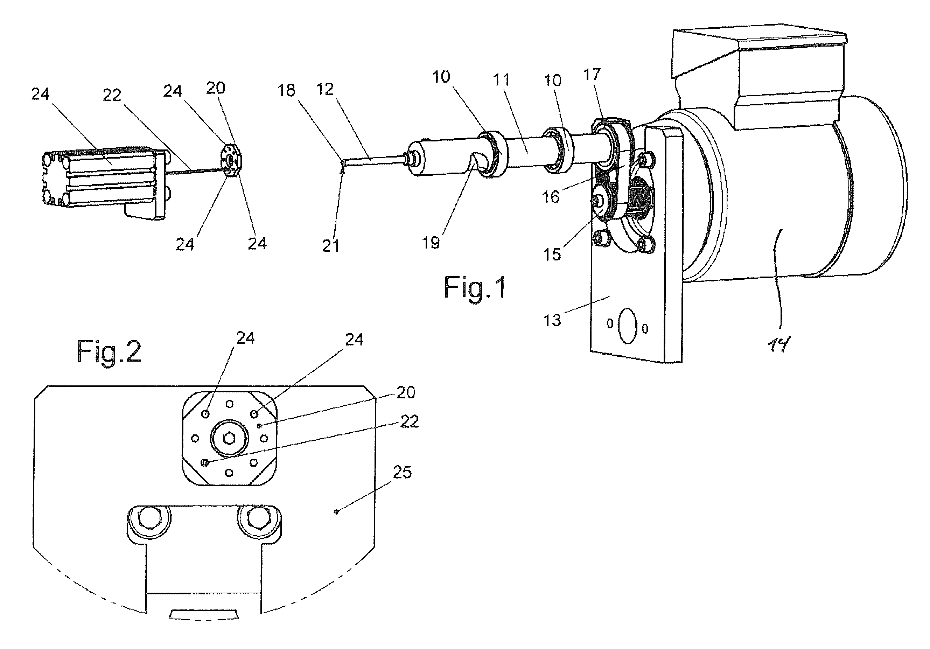

Fig. 1 zeigt eine Bohrvorrichtung mit den Erfindungsmerkmalen, wobei der besseren Übersichtlichkeit halber nur einige der erfindungswesentlichen Teile dargestellt sind. Unwesentliche Teile, wie zum Beispiel Rahmen oder Halterungen sind weggelassen.

Die Bohrvorrichtung weist ein mittels Kugellagern 10 an einem nicht dargestellten Schlitten der Bohrvorrichtung gelagerten Schaft 11 für einen Hohlbohrer 12 auf. Weiterhin ist an dem Schlitten eine Lagerplatte 13 angebracht, an welcher ein Antriebsmotor 14 zum drehenden Antreiben des Schaftes 11 und mit ihm des Hohlbohrers 12 angeflanscht ist. Der Antriebsmotor weist ein Antriebsrad 15 auf. Mittels eines Riemens 16 wird die Drehbewegung des Antriebrades 15 auf ein Riemenrad 17 übertragen, welches die Drehbewegung auf den Schaft 11 überträgt. Der Hohlbohrer 12 ist in an sich bekannter Weise mit einer Mittenbohrung 18 versehen. Beim Bohren entstehende Abfallstücke werden durch die Mittenbohrung hindurch nach hinten bis in den Schaft 11 geführt. Durch eine Auslaßöffnung 19 gelangen die Abfallstücke ins Freie und fallen in einen nicht näher dargestellten Sammelbehälter.

Fig.1 zeigt den Hohlbohrer 12 in seiner zurückgezogenen Position vor dem Bohren eines Behangstoffs. An der dem Schaft 10 gegenüberliegenden Seite des Hohlbohrers 12 ist ein Gegenlager 20 als Gegendruckorgan für den zu bohrenden Behangstoff während des Bohrvorganges angeordnet. Der Abstand zwischen einer mit einer Schneide 21 versehenen Spitze des Bohrers 12 und dem Gegenlager 20 ist in der gezeigten, zurückgezogenen Position des Hohlbohrers 12 so bemessen, dass der zu bohrende Behangstoff bequem eingelegt werden kann. Der Abstand ist also etwas größer, als die Höhe des in einem Arbeitsgang zu bohrenden Stapels des plissierten Behangstoffs. Auf der vom Hohlbohrer 12 abgewandten Seite des Gegenlagers 20 ist ein Dorn 22, welcher hier in Form einer dünnen Nadel ausgeführt ist, vorgesehen. Mittels des Dorns 20 wird im vorliegenden Fall nach jedem Bohrvorgang die Mittenbohrung 18 im Hohlbohrer 12 von Abfallstücken aus dem gebohrten Behangstoff freigestochen, in dem der Dorn 20 in die Mittenbohrung 18 eingeführt wird. Der Außendurchmesser des Dorns 22 ist dabei geringfügig kleiner bemessen, als der Innendurchmesser der Mittenbohrung 18.

Zum Einführen des Dorns 22 in die Mittenbohrung 18 wird der Dorn 22 in Richtung auf den Schaft 11 bewegt. Hierzu dient ein Druckmittelzylinder 23. Konkret wird nach dem Einlegen des zu bohrenden Behangstoffs der Behangstoff gebohrt. Der Hohlbohrer 12 befindet sich nun in seiner ausgefahrenen Position, in welcher die Schneide 21 auf das Gegenlager 20 auftrifft. Nun wird der Dorn 22 mittels des Druckmittelzylinders 23 in Richtung auf den Schaft 11 ausgefahren und dadurch in die Mittenbohrung 18 eingeführt. Hierdurch werden in der Mittenbohrung 18 befindliche Abfallstücke aus der Mittenbohrung 18 herausgedrückt und fallen durch die Auslaßöffnung 19 in einen Sammelbehälter oder dergleichen (nicht dargestellt). Hohlbohrer 12 und Dorn 22 werden nun wieder in ihre eingezogene Position zurückbewegt und der gebohrte Behangstoff kann entnommen werden. Der Vorgang beginnt von neuem.

Je nach Beschaffenheit des zu bohrenden Stoffes ist es unter Umständen nicht unbedingt erforderlich, dass nach jedem Bohrvorgang die Mittenbohrung 18 mittels des Dorns 22 gereinigt wird. In diesem Fall ist es selbstverständlich auch möglich, dass die Mittenbohrung 18 immer nach einer vorbestimmten Anzahl von Bohrungen, also beispielsweise bei jeder zweiten, dritten oder vierten Bohrung, mittels des Dorns 22 freigestochen wird.

Das Gegenlager 20 weist mehrere, im vorliegenden Fall acht Durchführungen 24 für den Dorn 22 auf. Durch diese Durchführungen 24 wird der Dorn 22 hindurchgeführt, wenn er in die Mittenbohrung 18 eingeführt wird. Beim Bohren des Behangstoffs trifft die Schneide 21 auf das Gegenlager 20 auf und ritzt dieses leicht an. Hierdurch verschleißt das Gegenlager 20 nach einer gewissen Anzahl von Bohrungen. Aufgrund der mehreren Durchführungen 24 wird das Gegenlager bei Erreichen der Verschleißgrenze, also nach einer vorbestimmten Anzahl von Bohrungen, so weiterbewegt, dass die nächste Durchführung 24 in Deckung mit dem Dorn 22 kommt. Es kann nun mit dieser Stelle des Gegenlagers 20 weiter gebohrt werden, bis auch hier die Verschleißgrenze erreicht ist. Das Gegenlager wird dann wieder zur nachfolgenden Durchführung 24 weiterbewegt.

Im vorliegenden Fall ist das Gegenlager 20 als Ring ausgebildet, der konkret am Außenumfang einen achteckigen Umfang aufweist. Hierdurch wird das Gegenlager 20 verdrehsicher in einer Matrize 25 gehalten. Die Durchführungen 24 sind am Umfang äquidistant verteilt angeordnet und werden jeweils durch weiterdrehen des Gegenlagers 20 weiterbewegt. Es ist eine der Anzahl der Ecken entsprechende Anzahl von Durchführungen 24 vorgesehen. Durch die Übereinstimmende Anzahl von Ecken und Durchführungen 24 kann das Gegenlager 20 in einer der Anzahl der Durchführungen 24 entsprechenden Anzahl von Orientierungen in das Gegenlager 20 eingelegt werden. Dennoch ist sicher gestellt, dass immer eine der Durchführungen 24 in Deckung mit dem Dorn 22 ist.

Ist das Gegenlager 20 im Bereich aller Durchführungen 24 verschlissen kann es umgedreht und seine Rückseite benutzt werden. Es stehen damit doppelt so viele Bohrpositionen am Gegenlager 20 zur Verfügung, wie Durchführungen 24 vorhanden sind.

### Bezugszeichenliste:

- 10: Kugellager
- 11: Schaft
- 12: Hohlbohrer
- 13: Lagerplatte
- 14: Antriebsmotor
- 15: Antriebrad
- 16: Riemen
- 17: Riemenrad
- 18: Mittenbohrung
- 19: Auslaßöffnung
- 20: Gegenlager
- 21: Schneide
- 22: Dorn
- 23: Druckmittelzylinder
- 24: Durchführung
- 25: Matrize

## Patentansprüche

1. Verfahren zum Bohren von plissiertem Behangmaterial für Verschattungsanlagen mit einem drehend antreibbaren Hohlbohrer (12) und einen in eine Mittenbohrung (18) des Hohlbohrers (12) einführbaren Dorn (22), **dadurch gekennzeichnet, dass** der Dorn (22) zum Zwecke der Reinigung der Mittenbohrung (18) des Hohlbohrers (12) hin und her bewegt wird.

2. Verfahren nach Anspruch 1, **dadurch gekennzeichnet, dass** die Mittenbohrung (18) des Hohlbohrers (12) vor der Durchführung jeder neuen Bohrung gereinigt wird.

3. Bohrvorrichtung zur Durchführung des Verfahrens nach Anspruch 1 oder 2 zum Bohren von plissiertem Behangmaterial für Verschattungsanlagen mit einem drehend antreibbaren Hohlbohrer (12), **gekennzeichnet durch** einen in den Hohlbohrer einführbaren Dorn (22).

4. Bohrvorrichtung nach Anspruch 3, **dadurch gekennzeichnet, dass** der Dorn (22) von einer freien Seite des Hohlbohrers (12) her in den Hohlbohrer (12) einführbar ist.

5. Bohrvorrichtung nach Anspruch 3 oder 4, **dadurch gekennzeichnet, dass** der Dorn (22) in Längsrichtung des Hohlbohrers (12) hin und her bewegbar ist.

6. Bohrvorrichtung nach Anspruch 5, **dadurch gekennzeichnet, dass** der Dorn (22) mittels eines Druckmittelzylinders (23) bewegbar ist.

7. Bohrvorrichtung nach einem der Ansprüche 3 bis 6, **dadurch gekennzeichnet, dass** ein Gegenlager (20) für zu bohrendes Material mit einer Durchführung (24) für den Dorn (22) versehen ist.

8. Bohrvorrichtung nach Anspruch 7, **dadurch gekennzeichnet, dass** das Gegenlager (20) mehrere Durchführungen (24) aufweist und drehbar und/oder verschieblich jedoch während eines Bohrvorgangs unbeweglich in einer Matrize gelagert ist.

9. Bohrvorrichtung nach Anspruch 8, **dadurch gekennzeichnet, dass** das Gegenlager (20) in einer der Anzahl der Durchführungen (22) entsprechenden Anzahl von Orientierungen in die Matrize einlegbar ist.

10. Bohrvorrichtung nach Anspruch 9, **dadurch gekennzeichnet, dass** das Gegenlager (20) vieleckig ausgebildet ist mit einer der Anzahl der Durchführungen (24) entsprechenden Anzahl von Ecken.
